# EUROPEAN PATENT APPLICATION

(11) **EP 4 554 165 A1**
(43) Date of publication of application: **14.05.2025**
(21) Application number: 23854103.1
(22) Date of filing: 28.06.2023
(51) Int. Cl.: H04L 41/0816

(54) **ROUTING METHOD FOR HOME NETWORK, AND ACCESS DEVICE AND MEDIUM**

(30) Priority: 19.08.2022 CN 202211001549
(71) Applicant: Huawei Technologies Co., Ltd., Shenzhen, Guangdong 518129 (CN)
(72) Inventor: CHENG, Jun, Shenzhen, Guangdong 518129 (CN); LIU, Haixing, Shenzhen, Guangdong 518129 (CN); YU, Lei, Shenzhen, Guangdong 518129 (CN)
(74) Representative: MERH-IP Matias Erny Reichl Hoffmann Patentanwälte PartG mbB
(86) International application number: PCT/CN2023/103089
(87) International publication number: WO 2024/037198

(57) **Abstract**

A routing method for a home network, an access device, and a medium are provided, and relate to the field of communication technologies, to implement IPv6 communication in the home network when a global IPv6 address (an IANA) cannot be obtained. When the access device cannot obtain a prefix from an upper-level access device or an obtained prefix does not meet a requirement for allocating the address to a lower-level access device, a routing translation policy or a transparent transmission policy is created. The routing translation policy causes the lower-level access device to perform IPv6 communication by using an IANA of the current access device. The transparent transmission policy causes the lower-level access device to be regarded as a downstream device of the upper-level access device. Therefore, the lower-level access device may directly communicate with the upper-level access device to obtain an IANA. There is no need to change any setting of the upper-level access device and a BRAS, and there is no need to increase an allocation capability of a BARS, that is, there is no need to update deployment in operation. In addition, a user equipment side does not have perception.

## Description

This application claims priority to Chinese Patent Application No. 202211001549.3, filed with the China National Intellectual Property Administration on August 19, 2022 and entitled "ROUTING METHOD FOR HOME NETWORK, ACCESS DEVICE, AND MEDIUM", which is incorporated herein by reference in its entirety.

### TECHNICAL FIELD

This application relates to the field of communication technologies, and in particular, to a routing method for a home network, an access device, and a medium.

### BACKGROUND

Due to placement position limitations of a network edge device, for example, an optical modem, and uneven allocation of a network among rooms in a home, a home user usually deploys a new routing device, such as a router or an access point (access point, AP), to extend the network and increase a coverage rate of the network in the home. Currently, both the optical modem and the router support the internet protocol version 6 (internet protocol version 6, IPv6), and a terminal device used by the user also gradually transitions to IPv6.

However, if the home user expects to extend an IPv6 network by one layer of network, that is, connects the downstream routing device to the network edge device, and when the routing device does not support distribution of a network address prefix, a user access terminal device connected to the routing device cannot obtain an IPv6 address, and then cannot perform IPv6 communication.

### SUMMARY

Embodiments of this application provide a routing method for a home network, an access device, and a medium, to implement IPv6 communication in the home network when a user equipment cannot obtain a global IPv6 address.

According to a first aspect, an embodiment of this application provides a routing method for a home network, applied to an access device using an IPv6 network, where the method includes: requesting an identity association for non-temporary address IANA and an identity association for prefix delegation IAPD address prefix from an upper-level access device; receiving the IANA allocated by the upper-level access device to the access device; and when it is determined that a translation condition is met, creating a routing translation policy for a downstream user equipment connected to the access device, where the routing translation policy is used for the downstream user equipment connected to the access device to communicate with the upper-level access device by using the IANA of the access device; and the translation condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In this embodiment of this application, when the access device cannot obtain the prefix from the upper-level access device or the obtained prefix does not meet a requirement for allocating the address to a lower-level access device, the routing translation policy is created, so that the lower-level access device can perform IPv6 communication by using the IANA of the current access device. There is no need to change any setting of the upper-level access device and a BRAS, and there is no need to increase an allocation capability of a BARS, that is, there is no need to update deployment in operation. In addition, a user equipment side does not have perception.

In a possible design, the method further includes: when it is determined that the translation condition is met, allocating a unique local address ULA to the user equipment, and sending the ULA to the user equipment, where the routing translation policy includes an address translation relationship between the ULA and the IANA of the access device.

For example, the user equipment is a terminal device.

According to the foregoing design, when the access device cannot obtain the prefix from the upper-level access device or the obtained prefix does not meet the requirement for allocating the address to the lower-level access device, only the ULA needs to be allocated to the terminal device, and therefore there is no need to obtain the prefix, so that the terminal device can receive and send a packet based on the ULA, and the access device forwards the packet for the terminal device based on the address translation relationship, so that the terminal device implements IPv6 communication, and the terminal device does not have perception.

In a possible design, the method further includes: The access device receives an IPv6 packet sent by the user equipment, where the IPv6 packet carries the ULA; and the access device translates, according to the routing translation policy, the ULA carried in the IPv6 packet into the IANA of the access device, and sends a translated IPv6 packet to the upper-level access device.

In a possible design, the sending the ULA to the user equipment includes:
sending a router advertisement RA packet to the user equipment, where the RA packet carries the ULA; or
sending a dynamic host configuration protocol DHCP packet to the user equipment, where the DHCP packet carries the ULA.

In a possible design, the upper-level access device is a network edge device, and the access device is a routing device; or the upper-level access device is a broadband remote access server BRAS, and the access device is a network edge device.

For example, the user equipment may be a routing device or a terminal device.

In a possible design, when the upper-level access device is the BRAS, the access device is connected to the BRAS in a bridging manner.

According to a second aspect, an embodiment of this application provides a routing method for a home network, applied to an access device using an IPv6 home network, where the method includes: requesting an identity association for non-temporary address IANA and an identity association for prefix delegation IAPD address prefix from an upper-level access device; receiving the IANA allocated by the upper-level access device to the access device; and when it is determined that a transparent transmission condition is met, creating a transparent transmission policy for a downstream user equipment connected to the access device, where the transparent transmission policy is that the access device transparently transmits an IPv6 packet between the user equipment and the upper-level access device; and the transparent transmission condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In this embodiment of this application, when the access device cannot obtain the prefix from the upper-level access device or the obtained prefix does not meet a requirement for allocating the address to a lower-level access device, the transparent transmission policy is created, so that the lower-level access device may be regarded as a downstream device of the upper-level access device. Therefore, the lower-level access device may directly communicate with the upper-level access device. There is no need to change any setting of the upper-level access device and a BRAS, and there is no need to increase an allocation capability of a BARS, that is, there is no need to update deployment in operation. In addition, a user equipment side does not have perception.

In a possible design, the method further includes: receiving a request packet for obtaining an IANA by the user equipment, and transparently transmitting the request packet to the upper-level access device according to the transparent transmission policy; and receiving the IANA allocated by the upper-level access device to the user equipment, and sending the IANA of the user equipment to the user equipment.

In this embodiment of this application, when the access device cannot obtain the prefix from the upper-level access device or the obtained prefix does not meet the requirement for allocating the address to the lower-level access device, the transparent transmission policy is created, so that the lower-level access device may be regarded as a downstream device of the upper-level access device, and the lower-level access device of the current access device may obtain an IANA from the upper-level access device of the current access device, to implement IPv6 communication.

In a possible design, the upper-level access device is a network edge device, and the access device is a routing device; or the upper-level access device is a broadband remote access server BRAS, and the access device is a network edge device.

In a possible design, when the upper-level access device is the BRAS, the access device is connected to the BRAS in a bridging manner.

According to a third aspect, an embodiment of this application provides an access device, where the access device uses an IPv6 network, and the access device includes:
a sending module, configured to request an identity association for non-temporary address IANA and an identity association for prefix delegation IAPD address prefix from an upper-level access device;
a receiving module, configured to receive the IANA allocated by the upper-level access device to the access device; and
a processing module, configured to: when it is determined that a translation condition is met, create a routing translation policy for a downstream user equipment connected to the access device, where the routing translation policy is used for the downstream user equipment connected to the access device to communicate with the upper-level access device by using the IANA of the access device; and
the translation condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In a possible design, the processing module is further configured to:
when it is determined that the translation condition is met, allocate a unique local address ULA to the user equipment; and
the sending module is further configured to send the ULA to the user equipment, where
the routing translation policy includes an address translation relationship between the ULA and the IANA of the access device.

In a possible design, the receiving module is further configured to receive an IPv6 packet sent by the user equipment, where the IPv6 packet carries the ULA;
the processing module is further configured to translate, according to the routing translation policy, the ULA carried in the IPv6 packet into the IANA of the access device; and
the sending module is further configured to send a translated IPv6 packet to the upper-level access device.

In a possible design, the sending module is specifically configured to:
send a router advertisement RA packet to the user equipment, where the RA packet carries the ULA; or
send a dynamic host configuration protocol DHCP packet to the user equipment, where the DHCP packet carries the ULA.

In a possible design, the upper-level access device is a network edge device, and the access device is a routing device; or the upper-level access device is a broadband remote access server BRAS, and the access device is a network edge device.

In a possible design, when the upper-level access device is the BRAS, the access device is connected to the BRAS in a bridging manner.

According to a fourth aspect, an embodiment of this application provides an access device, where the access device uses an IPv6 network, and the access device includes:
a sending module, configured to request an identity association for non-temporary address IANA and an identity association for prefix delegation IAPD address prefix from an upper-level access device;
a receiving module, configured to receive the IANA allocated by the upper-level access device to the access device; and
a processing module, configured to: when it is determined that a transparent transmission condition is met, create a transparent transmission policy for a downstream user equipment connected to the access device, where the transparent transmission policy is that the access device transparently transmits an IPv6 packet between the user equipment and the upper-level access device; and
the transparent transmission condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In a possible design, the receiving module is further configured to receive a request packet for obtaining an IANA by the user equipment;
the sending module is further configured to transparently transmit the request packet to the upper-level access device according to the transparent transmission policy;
the receiving module is further configured to receive the IANA allocated by the upper-level access device to the user equipment; and
the sending module is further configured to send the IANA of the user equipment to the user equipment.

In a possible design, the upper-level access device is a network edge device, and the access device is a routing device; or the upper-level access device is a broadband remote access server BRAS, and the access device is a network edge device.

In a possible design, when the upper-level access device is the BRAS, the access device is connected to the BRAS in a bridging manner.

According to a fifth aspect, an embodiment of this application further provides an access device, including a processor and a memory, where the memory stores a computer program; and the processor is configured to execute the computer program stored in the memory, to cause the access device to perform the method in any possible designs of the first aspect, or performs the method in any possible designs of the second aspect.

According to a sixth aspect, an embodiment of this application further provides an access device, including a processor and an interface circuit. The interface circuit is configured to: receive code instructions and transmit the code instructions to the processor; and the processor is configured to run the code instructions to perform the method in any possible designs of the first aspect, or perform the method in any possible designs of the second aspect.

According to a seventh aspect, an embodiment of this application provides a computer-readable storage medium, storing computer program instructions. When the instructions are executed, the method in any possible designs of the first aspect is implemented, or the method in any possible designs of the second aspect is implemented.

According to an eighth aspect, an embodiment of this application provides a computer program product, including computer program code. When the computer program code is run by an access device or a processor, the processor is caused to perform the method in any possible designs of the first aspect, or perform the method in any possible designs of the second aspect.

In this application, based on implementations according to the foregoing aspects, the implementations may be further combined to provide more implementations. For beneficial effects of the third aspect to the eighth aspect, specifically refer to beneficial effects of the possible designs in the first aspect or the second aspect. Details are not described herein again.

### BRIEF DESCRIPTION OF DRAWINGS

To describe technical solutions of embodiments of this application more clearly, the following briefly introduces accompanying drawings used in describing embodiments.
FIG. 1 is a diagram of an architecture of a possible communication scenario according to an embodiment of this application;
FIG. 2 is a diagram of an architecture of another possible communication scenario according to an embodiment of this application;
FIG. 3 is a schematic flowchart of a routing method for a home network according to an embodiment of this application;
FIG. 4 is a schematic flowchart of a routing method for a home network in a first possible manner according to an embodiment of this application;
FIG. 5 is a schematic flowchart of another routing method for a home network in a first possible manner according to an embodiment of this application;
FIG. 6 is a schematic flowchart of another routing method for a home network according to an embodiment of this application;
FIG. 7 is a schematic flowchart of a routing method for a home network in a second possible manner according to an embodiment of this application;
FIG. 8 is a schematic flowchart of another routing method for a home network in a second possible manner according to an embodiment of this application;
FIG. 9 is a diagram of a structure of an access device according to an embodiment of this application; and
FIG. 10 is a diagram of a structure of another access device according to an embodiment of this application.

### DESCRIPTION OF EMBODIMENTS

The following explains and describes technical terms involved in embodiments of this application.
(1) A prefix is a number of bits with a fixed value in an address or a number of bits representing a network identifier. An IPv6 prefix may be written as an address/a prefix length. An IPv6 address is formed by a 64-bit prefix and a 64-bit network interface ID. The 64-bit prefix may include a 48-bit site prefix and a 16-bit subnet ID. For example, when a site is a router, a router prefix may be represented as 21DA:D3::/48. A subnet prefix may include a 48-bit site prefix and a 16-bit subnet ID, for example, may be represented as 21DA:D3:0:2F3B::/64.
(2) A global unicast address (global unicast address, GUA) may represent a public network address. Generally, first three bits of the GUA address are fixed to 001. Therefore, a range of the GUA address is 2000:--3FFF:FFFF:FFFF:FFFF:FFFF:FFFF.
(3) A Unique local address (unique local address, ULA) may represent a private network address. First seven bits of the ULA address are in a fixed format. Generally, the fixed format of the first seven bits is FC00::/7. The ULA address is used only within a network.
(4) Identity association for non-temporary address (Identity Association for Non-temporary Address, IANA) and identity association for prefix delegation (Identity Association for Prefix Delegation, IAPD): Both the IANA and the IAPD belong to addresses of an IPv6 network. The IANA is usually used as a network-side address of a network edge device, and is used for connecting to an external network. The IAPD may be used by the network edge device to provide a user-side address for a user-side device. Usually, after obtaining the IAPD address prefix, the network edge device may allocate an IPv6 network address to a routing device or a terminal device that accesses the network edge device, to perform IPv6 network communication.

The following describes the solutions provided in embodiments of this application with reference to specific embodiments. This application is applied to a scenario of at least two levels of access devices.

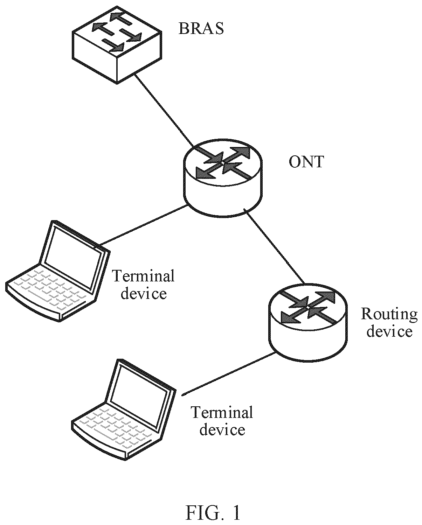

FIG. 1 is a diagram of an architecture of a possible communication scenario according to an embodiment of this application. As shown in FIG. 1, a network edge device of a home network causes a user equipment to access an external network through a broadband remote access server (broadband remote access server, BRAS). That is, the network edge device connects to the downstream user equipment. The user equipment may include a routing device of the home network, or may include a terminal device. The network edge device may be, for example, an optical network termination (optical network termination, ONT), an optical network unit (optical network unit, ONU), or an access point (access point, AP). The ONT may also be referred to as an optical modem. In FIG. 1, a scenario of two-level routing cascading networking of the home network is used as an example, and the network edge device may also be referred to as a home gateway device. In FIG. 1, an example in which the network edge device is the ONT is used. The routing device may be a router, a switch, or the like. The network edge device may further connect to a downstream terminal device, and the routing device may connect to a downstream terminal device. For example, the terminal device may be a smartphone, a personal computer (personal computer, PC), a tablet computer, a printer, or a smart speaker.

The broadband remote access server is an access gateway for a broadband network application. The broadband remote access server is a bridge between backbone networks of a broadband access network, and provides a basic access means and a management function of the broadband access network. The broadband remote access server is located at an edge of the network, provides a broadband access service, implements convergence and forwarding of a plurality of services, and can meet requirements of different users for a transmission capacity and a bandwidth utilization rate. Therefore, the broadband remote access server is a core device for broadband user access. The broadband remote access server mainly completes two functions. One is a network carrying function, which is a function responsible for a PPPoE (Point-to-Point Protocol Over Ethernet, which is a manner of transmitting a PPP session over the Ethernet) connection of a terminal user and converging traffic of the user. The other is a control implementation function, which matches with an authentication system, a charging system, a customer management system, and a service policy control system to implement authentication, charging, and management functions of user access.

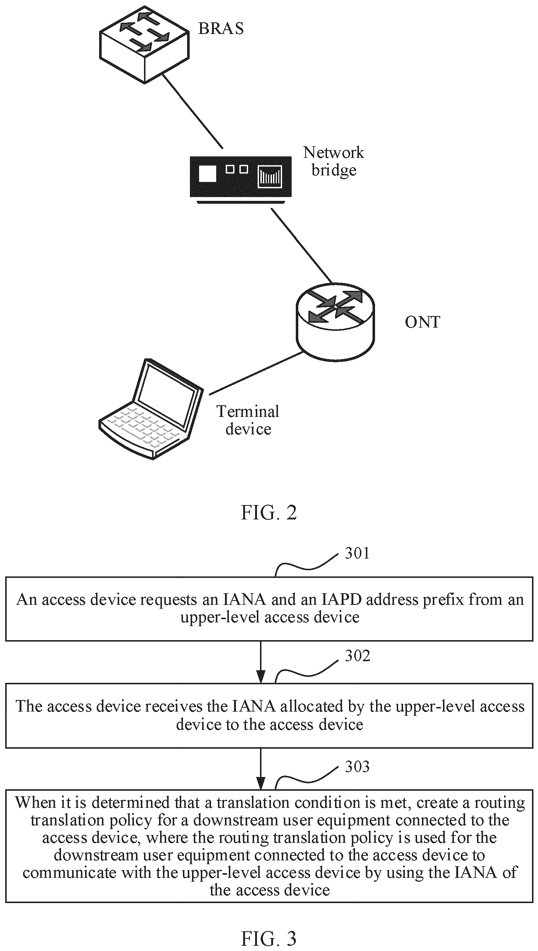

FIG. 2 is a diagram of an architecture of another possible communication scenario according to an embodiment of this application. In FIG. 2, the network edge device of the home network is connected to the BRAS in a bridging manner. In FIG. 2, connection through a network bridge is used as an example. The network bridge may be an ONU, or certainly, may be another network bridge device. This is not specifically limited in this application. In this scenario, the network edge device of the home network may be a device such as an ONT or an AP.

Currently, IPv6 network deployment is uneven in the foregoing two communication scenarios. For the scenario shown in FIG. 1, the following cases exist.

Case 1: The ONT obtains an address (IANA) of a WAN interface from the BRAS, for example, 2001::1. However, the ONT does not obtain a delegated prefix, for example, an IAPD, from the BRAS through requesting. In this case, a downstream routing device connected to the ONT does not obtain the prefix through requesting either. Consequently, a GUA address cannot be allocated to a downstream terminal device connected to the routing device, and the terminal device cannot access the external network.

Case 2: The ONT obtains an address (IANA) of a WAN interface from the BRAS, for example, 2001::1. The ONT obtains a delegated prefix (IAPD) from the BRAS through requesting, for example, 2002::/64. In this case, a downstream routing device connected to the ONT does not obtain the prefix through requesting. Consequently, a GUA address cannot be allocated to a downstream terminal device connected to the routing device, and the terminal device cannot access the external network.

Case 3: An address obtained by a routing device is 2001::1/128, and a delegated prefix is 2001::1/64. The 64-bit delegated prefix obtained by the routing device is the same as a 64-bit prefix in the obtained address. Consequently, a prefix address of the terminal device is the same as the prefix of the routing device, and the terminal device cannot access the external network.

For the scenario shown in FIG. 2, the following Case 4 exists: In a bridging connection manner, the BRAS only allocates an address, but does not allocate a prefix. Consequently, a downstream terminal device connected to the ONT cannot obtain a GUA address, and the terminal device cannot access the external network.

Based on the foregoing cases, embodiments of this application provide a routing method for a home network and an apparatus, to avoid a case in which a terminal device cannot access an external network through an IPv6 network.

For example, embodiments of this application provide two possible routing methods for the home network.

In a first possible manner, when a problem occurs in prefix allocation, a routing translation manner is used, and a downstream terminal device connected to a routing device communicates with the external network by using an address (GUA) of the routing device.

In a second possible manner, when a problem occurs in prefix allocation, a transparent transmission manner is used, and a routing device transparently transmits a communication packet between a downstream terminal device connected to the routing device and an upstream network device of the routing device.

The first possible manner is first described as follows.

FIG. 3 is a schematic flowchart of a routing method for a home network according to an embodiment of this application. The method may be implemented by a routing apparatus of the home network. The routing apparatus may be deployed in an access device. The access device may be a routing device connecting to a downstream terminal device, or may be a network edge device connecting to the downstream routing device.

301: The access device requests an IANA and an IAPD address prefix from an upper-level access device.

The upper-level access device may be a network edge device, and the access device may be the routing device, as shown in FIG. 1. The upper-level access device is a BRAS, and the access device may be the network edge device, as shown in FIG. 2.

For example, the access device may request the IANA and the IAPD address prefix from the upper-level access device through a WAN interface.

The WAN interface may be an x digital subscriber line (x digital subscriber line, xDSL) interface, a passive optical network (passive optical network, PON) interface, or an Ethernet interface.

302: The access device receives the IANA allocated by the upper-level access device to the access device.

303: When it is determined that a translation condition is met, create a routing translation policy for a downstream user equipment connected to the access device, where the routing translation policy is used for the downstream user equipment connected to the access device to communicate with the upper-level access device by using the IANA of the access device.

The translation condition includes that the IAPD address prefix sent by the upper-level access device is not received, or a number of mask bits of the received IAPD address prefix that is sent by the upper-level access device is M, where M is a maximum number of mask bits of a prefix in an IPv6 network address. For example, M=64.

For example, when the access device is the network edge device, the downstream user equipment connected to the access device may be the terminal device, or may be the routing device. When the access device is the routing device, the downstream user equipment connected to the access device may be the terminal device.

In some embodiments, if the access device receives the IAPD address prefix sent by the upper-level access device and an IPAD address prefix is less than M, this indicates that the IAPD address prefix is available, and the access device may allocate, based on the IAPD address prefix, an IPv6 address to the downstream user equipment connected to the access device, where the IPv6 address is used as a GUA of the downstream user equipment connected to the access device. Therefore, the user equipment may access an external network by using the GUA.

In some embodiments, when it is determined that the translation condition is met, the access device may allocate a ULA to the user equipment. For example, the access device generates an M-bit ULA prefix, for example, fd00::64. Then, the ULA is allocated, based on the generated M-bit ULA prefix, to the downstream user equipment connected to the access device, and the allocated ULA is sent to the user equipment. For example, there is an address translation relationship between the ULA of the user equipment and the IANA of the access device. It may be understood that, the routing translation policy may include the address translation relationship between the ULA and the IANA of the access device.

In a manner, when sending the ULA to the user equipment, the access device may use a router advertisement (router advertisement, RA) packet, where the RA packet carries the ULA allocated to the user equipment. In another manner, when sending the ULA to the user equipment, the access device may use a dynamic host configuration protocol (dynamic host configuration protocol, DHCP) packet, where the DHCP packet carries the ULA.

In some scenarios, when accessing the network through a point-to-point protocol over Ethernet (point-to-point over ethernet, PPPOE), the user equipment may obtain the IPv6 address through the access device. For example, when allocating the ULA to the user equipment, the access device notifies the user equipment of the ULA.

When accessing the network, the user equipment may send an IPv6 packet by using the ULA obtained from the access device, in other words, a source IP address of the IPv6 packet is the ULA obtained from the access device. When receiving the IPv6 packet from the user equipment, for the IPv6 packet of which the source IP address is the ULA, the access device translates the source IP address of the IPv6 packet into the IANA of the access device (namely, a GUA of the access device), and then the access device sends a translated IPv6 packet to the upper-level access device.

For example, the access device may translate the source IP address of the IPv6 packet by using a network address translation (network address translation, NAT) technology, for example, a NAT66 technology.

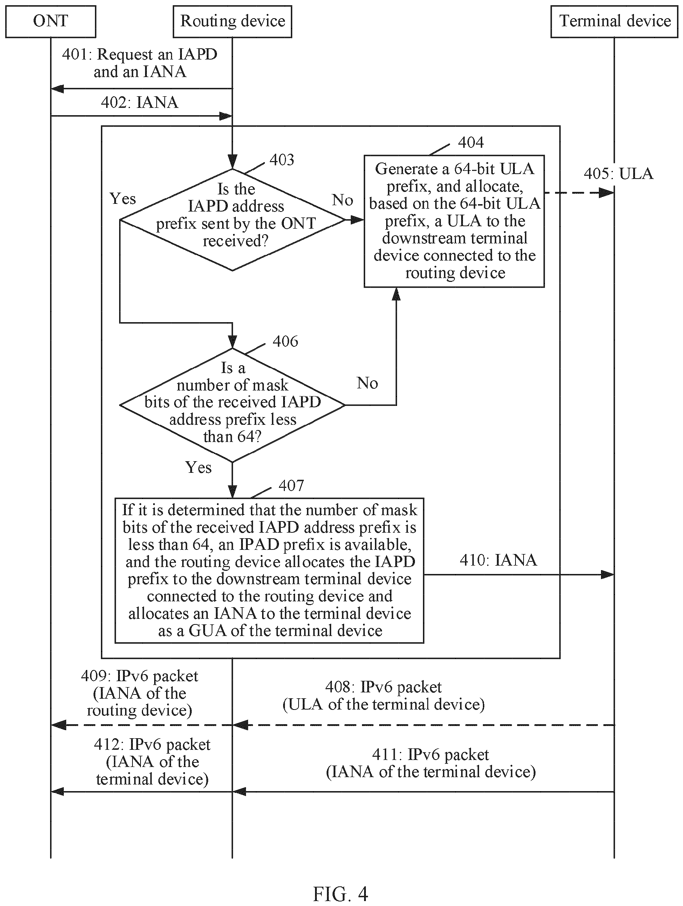

The first possible manner is described below with reference to the architecture shown in FIG. 1. Refer to FIG. 4. In FIG. 4, an example in which an access device is a routing device, an upper-level access device is an ONT, and a downstream user equipment connected to the routing device is the terminal device is used.

401: The routing device requests an IAPD address prefix and an IANA from the ONT.

For example, when accessing the external network through a PPPOE, the routing device may request IPv6 address information from the ONT. The IPv6 address information includes the IANA, and may further include the IAPD address prefix.

In an example, if the ONT obtains the IANA and the IAPD address prefix from the BRAS, and a number of mask bits of the IAPD address prefix obtained by the ONT from the BRAS is less than 64, the ONT may allocate the IAPD address prefix and the IANA to the routing device based on the IAPD address prefix. In this case, the ONT may send the IANA and the IAPD address prefix to the routing device. In a case, a number of mask bits of the IAPD address prefix sent by the ONT to the routing device is 64 bits. In another case, a number of mask bits of the IAPD address prefix sent by the ONT to the routing device is less than 64 bits.

In another example, if the ONT obtains the IANA and the IAPD address prefix from the BRAS, and a number of mask bits of the IAPD address prefix obtained by the ONT from the BRAS is equal to 64, the ONT cannot allocate the IAPD address prefix to the routing device. In this case, the ONT sends the IANA to the routing device, but does not send the IAPD address prefix to the routing device.

It should be noted that, the ONT receives the IANA as a GUA of the ONT.

402: The ONT sends the IANA to the routing device.

403: The routing device determines whether the IAPD address prefix sent by the ONT is received. If the routing device determines that the IAPD address prefix sent by the ONT is not received, perform 404. If the routing device determines that the IAPD address prefix sent by the ONT is received, perform 406.

404: The routing device generates a 64-bit ULA prefix, and allocates, based on the 64-bit ULA prefix, a ULA to the downstream terminal device connected to the routing device. Then, perform 405.

405: The routing device sends the ULA to the downstream terminal device connected to the routing device. Then, perform 408.

406: Determine whether the number of mask bits of the received IAPD address prefix is less than 64. If it is determined that the number of mask bits of the received IAPD address prefix is not less than 64, perform 404. If it is determined that the number of mask bits of the received IAPD address prefix is less than 64, perform 407.

407: If the routing device determines that the number of mask bits of the received IAPD address prefix is less than 64, an IPAD prefix is available, and the routing device allocates the IAPD prefix to the downstream terminal device connected to the routing device and allocates an IANA to the terminal device as a GUA of the terminal device. Then, perform 410.

408: The terminal device receives the ULA, where the ULA is used as the GUA of the terminal device on the terminal device, and the terminal device accesses the external network and sends an IPv6 packet to the routing device. The IPv6 packet carries the ULA, in other words, a source IP address of IPv6 is the ULA allocated by the routing device. Then, perform 409.

409: After receiving the IPv6 packet, the routing device translates the source IP address of the IPv6 into a GUA of the routing device (namely, the IANA of the routing device), and sends an IPv6 packet to the ONT.

410: Send the IANA to the terminal device.

411: After the terminal device receives the IANA, the IANA is used as the GUA of the terminal device on the terminal device, and the terminal device accesses the external network and sends an IPv6 packet to the routing device. The IPv6 packet carries the IANA, in other words, a source IP address of IPv6 is the IANA allocated by the routing device. Then, perform 411.

412: After receiving the IPv6 packet, the routing device sends the IPv6 packet to the ONT.

In a possible scenario, the ONT obtains an address (IANA) of a WAN interface from the BRAS, but the ONT does not obtain a delegated prefix from the BRAS, for example, the IAPD through requesting. In this case, the ONT may allocate a ULA to the routing device, and generate a routing translation policy. The routing translation policy may include an address translation relationship between the ULA of the routing device and the IANA of the ONT. The ONT sends the ULA allocated to the routing device to the routing device. After receiving the ULA allocated by the ONT, the routing device uses the ULA allocated by the ONT as a GUA of the routing device. The routing device cannot obtain the IAPD from the ONT, and consequently, cannot allocate an INAN to the downstream terminal device connected to the routing device. In this case, the routing device may allocate a ULA to the terminal device, and the routing device may also generate a routing translation policy. The routing translation policy generated by the routing device may include an address translation relationship between the ULA of the terminal device and the ULA of the routing device. The routing device sends the ULA of the terminal device to the terminal device. Therefore, the terminal device may send an IPv6 packet to the routing device based on the ULA allocated by the routing device, where the IPv6 packet carries the ULA of the terminal device, that is, a source IP address is the ULA of the terminal device. The routing device translates the ULA of the terminal device in the IPv6 packet into the ULA of the routing device according to the routing translation policy. The routing device sends an IPv6 packet carrying the ULA of the routing device to the ONT. After receiving the IPv6 packet carrying the ULA of the routing device, the ONT translates the ULA of the routing device in the IPv6 packet to the IANA of the ONT. Then, an IPv6 packet carrying the IANA of the ONT is sent to the BRAS.

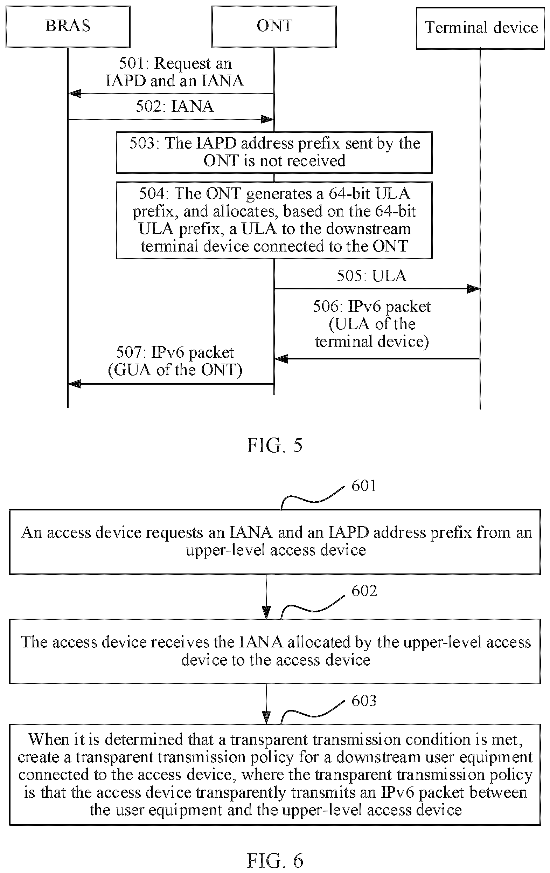

The first possible manner is described below with reference to the architecture shown in FIG. 2. Refer to FIG. 5.

501: The ONT requests an IAPD address prefix and an IANA from the BRAS.

In this architecture, the BRAS does not allocate the IAPD address prefix to the ONT.

502: The ONT receives the IANA sent by the BRAS.

503: The ONT determines that that the IAPD address prefix sent by the ONT is not received.

504: The ONT generates a 64-bit ULA prefix, and allocates, based on the 64-bit ULA prefix, a ULA to the downstream terminal device connected to the ONT.

505: The ONT sends the ULA to the downstream terminal device connected to the ONT.

506: The terminal device receives the ULA, where the ULA is used as a GUA of the terminal device on the terminal device, and the terminal device accesses the external network and sends an IPv6 packet to the ONT. The IPv6 packet carries the ULA, in other words, a source IP address of IPv6 is the ULA allocated by the ONT.

507: After receiving the IPv6 packet, the ONT translates the source IP address of the IPv6 into a GUA of the ONT (namely, the IANA of the ONT), and sends an IPv6 packet to the BRAS.

The second possible manner is described as follows.

FIG. 6 is a schematic flowchart of another routing method for a home network according to an embodiment of this application. The method may be implemented by a routing apparatus of the home network. The routing apparatus may be deployed in an access device. The access device may be the routing device connecting to the downstream terminal device, or may be the network edge device connecting to the downstream routing device.

601: Refer to 301. Details are not described herein again.

602: The access device receives an IANA allocated by an upper-level access device to the access device.

603: When it is determined that a transparent transmission condition is met, create a transparent transmission policy for a downstream user equipment connected to the access device, where the transparent transmission policy is that the access device transparently transmits an IPv6 packet between the user equipment and the upper-level access device.

The transparent transmission condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In the second possible manner, the access device may directly transparently transmit an IPv6 packet of the upper-level access device to the downstream user equipment of the access device. Alternatively, an IPv6 packet of the downstream user equipment of the access device may be directly transparently transmitted to the upper-level access device of the access device. In this case, the downstream user equipment connected to the access device may directly request an IPv6 address from the upper-level access device of the access device.

In some scenarios, when accessing the network through a point-to-point protocol over Ethernet (point-to-point over ethernet, PPPOE), the user equipment may obtain the IPv6 address (namely, an IANA) from the upper-level access device of the access device through the access device.

For example, when accessing the network through the point-to-point protocol over Ethernet (point-to-point over ethernet, PPPOE), the user equipment sends a request packet to the access device for obtaining the IANA, and the access device transparently transmits the request packet to the upper-level access device according to the transparent transmission policy. The upper-level access device may allocate the IANA to the user equipment; and send the IANA allocated to the user equipment to the user equipment.

When accessing the network, the user equipment may send the IPv6 packet by using the IANA obtained from the access device, in other words, a source IP address of the IPv6 packet is the IANA obtained from the access device. When receiving the IPv6 packet from the user equipment, the access device sends an IPv6 packet to the upper-level access device.

In the second possible manner, when the access device cannot allocate the IANA to the downstream user equipment connected to the access device, a transparent transmission mode is set, and the user equipment may be considered as a downstream device connected to the upper-level access device and obtain the IANA from the upper-level access device.

In some embodiments, if the access device receives the IAPD address prefix sent by the upper-level access device and an IPAD address prefix is less than M, this indicates that the IAPD address prefix is available, and the access device may allocate, based on the IAPD address prefix, the IPv6 address to the downstream user equipment connected to the access device, where the IPv6 address is used as a GUA of the downstream user equipment connected to the access device. Therefore, the user equipment may access the external network by using the GUA.

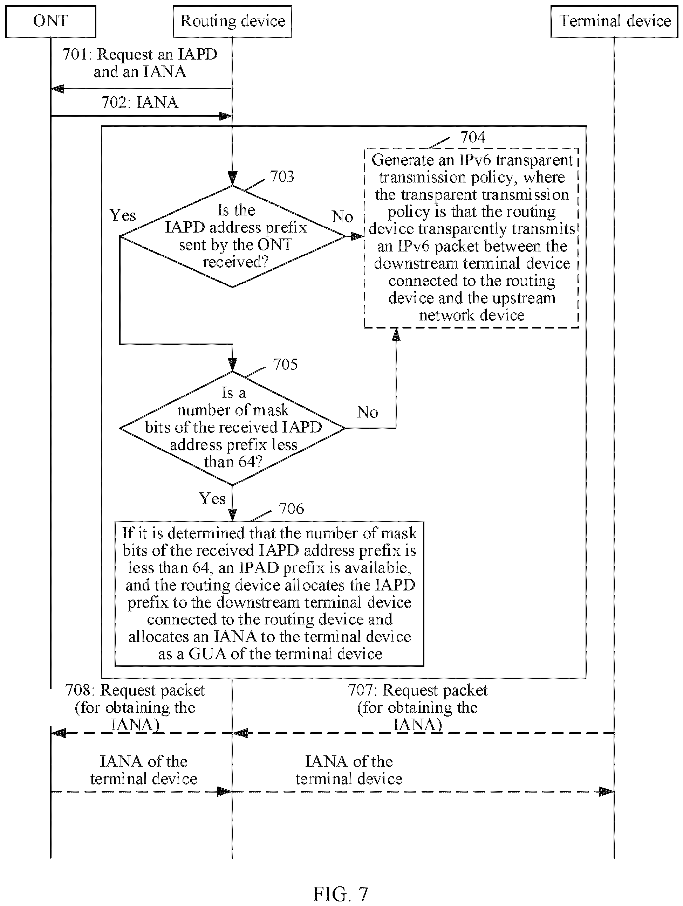

The second possible manner is described below with reference to the architecture shown in FIG. 1. Refer to FIG. 7. In FIG. 7, an example in which an access device is the routing device, an upper-level access device is the ONT, and a downstream user equipment connected to the routing device is the terminal device is used.

701: The routing device requests an IAPD address prefix and an IANA from the ONT.

For example, when accessing the external network through a PPPOE, the routing device may request IPv6 address information from the ONT. The IPv6 address information includes the IANA, and may further include the IAPD address prefix.

In an example, if the ONT obtains the IANA and the IAPD address prefix from the BRAS, and a number of mask bits of the IAPD address prefix obtained by the ONT from the BRAS is less than 64, the ONT may allocate the IAPD address prefix and the IANA to the routing device based on the IAPD address prefix. In this case, the ONT may send the IANA and the IAPD address prefix to the routing device. In a case, a number of mask bits of the IAPD address prefix sent by the ONT to the routing device is 64. In another case, a number of mask bits of the IAPD address prefix sent by the ONT to the routing device is less than 64.

In another example, if the ONT obtains the IANA and the IAPD address prefix from the BRAS, and a number of mask bits of the IAPD address prefix obtained by the ONT from the BRAS is equal to 64, the ONT cannot allocate the IAPD address prefix to the routing device. In this case, the ONT sends the IANA to the routing device, but does not send the IAPD address prefix to the routing device.

It should be noted that, the ONT receives the IANA as a GUA of the ONT.

702: The ONT sends the IANA to the routing device.

703: The routing device determines whether the IAPD address prefix sent by the ONT is received. If the routing device determines that the IAPD address prefix sent by the ONT is not received, perform 704. If the routing device determines that the IAPD address prefix sent by the ONT is received, perform 705.

704: The routing device generates an IPv6 transparent transmission policy, where the transparent transmission policy is that the routing device transparently transmits an IPv6 packet between the downstream terminal device connected to the routing device and the upstream network device. Then, perform 707.

705: Determine whether a number of mask bits of the received IAPD address prefix is less than 64. If it is determined that the number of mask bits of the received IAPD address prefix is not less than 64, perform 704. If it is determined that the number of mask bits of the received IAPD address prefix is less than 64, perform 706.

706: If the routing device determines that the number of mask bits of the received IAPD address prefix is less than 64, an IPAD prefix is available, and the routing device allocates the IAPD prefix to the downstream terminal device connected to the routing device and allocates an IANA to the terminal device as a GUA of the terminal device.

707: When accessing the network through the PPPOE, the terminal device sends a request packet for obtaining the IANA to the routing device. Then, perform 708.

708: The routing device transparently transmits the request packet to the ONT.

In an example, if the ONT obtains the IANA and the IAPD address prefix from the BRAS, and the number of mask bits of the IAPD address prefix obtained by the ONT from the BRAS is less than 64, the ONT may allocate the IAPD address prefix and the IANA to the terminal device based on the IAPD address prefix. In this case, the ONT may send the IANA to the terminal device.

In some embodiments, if the ONT obtains the IANA and the IAPD address prefix from the BRAS, and the number of mask bits of the IAPD address prefix obtained by the ONT from the BRAS is equal to 64, the ONT cannot allocate the IAPD address prefix to the downstream routing device connected to the ONT, and consequently, the downstream routing device cannot allocate the IANA to another downstream terminal device connected to the routing device. In this case, the ONT may also create a transparent transmission policy for another device accessing the network other than the routing device. In this case, the ONT transparently transmits the request packet of the terminal device to the BRAS. Therefore, the terminal device may obtain the IANA from the BRAS.

In some other embodiments, if the ONT obtains the IANA and the IAPD address prefix from the BRAS, and the ONT cannot obtain the IAPD address prefix from the BRAS, the ONT cannot allocate the IAPD address prefix to the downstream routing device connected to the ONT, and consequently, the downstream routing device cannot allocate the IANA to another downstream terminal device connected to the routing device. In this case, the ONT may also create a transparent transmission policy. In this case, the ONT transparently transmits request packets of downstream devices to the BRAS. Therefore, both the terminal device and the routing device may obtain the IANA from the BRAS. In this case, the ONT and the routing device each use the transparent transmission policy to forward an IPv6 packet of the connected device that is downstream. For example, for a downlink IPv6 packet, a transparent transmission object may be distinguished based on a device identifier.

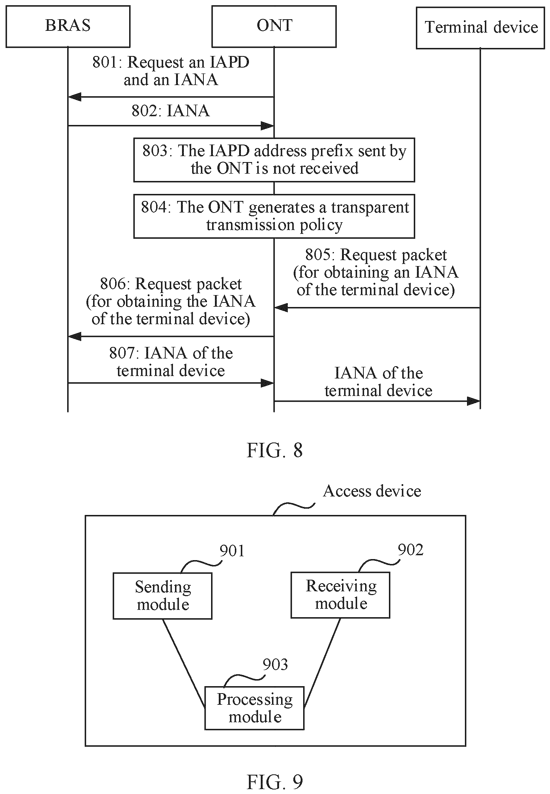

The first possible manner is described below with reference to the architecture shown in FIG. 2. Refer to FIG. 8.

801: The ONT requests an IAPD address prefix and an IANA from the BRAS.

In this architecture, the BRAS does not allocate the IAPD address prefix to the ONT.

802: The ONT receives the IANA sent by the BRAS.

803: The ONT determines that the IAPD address prefix sent by the ONT is not received.

804: The ONT generates a transparent transmission policy.

805: When accessing the network through a PPPOE, the terminal device sends a request packet for obtaining an IANA to the ONT.

806: The ONT transparently transmits the request packet to the BRAS.

807: The ONT receives the IANA allocated by the BRAS to the terminal device, and transparently transmits the IANA allocated to the terminal device to the terminal device.

The foregoing describes in detail the routing method for a home network in embodiments of this application with reference to FIG. 3 to FIG. 8. Based on a same technical concept as the foregoing routing method for a home network, an embodiment of this application further provides an access device. As shown in FIG. 9, the access device includes a sending module 901, a receiving module 902, and a processing module 903.

A possible scenario is described below.

The sending module 901 is configured to request an identity association for non-temporary address IANA and an identity association for prefix delegation IAPD address prefix from an upper-level access device;
the receiving module 902 is configured to receive the IANA allocated by the upper-level access device to the access device; and
the processing module 903 is configured to: when it is determined that a translation condition is met, create a routing translation policy for a downstream user equipment connected to the access device, where the routing translation policy is used for the downstream user equipment connected to the access device to communicate with the upper-level access device by using the IANA of the access device; and
the translation condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In a possible design, the processing module 903 is further configured to:
when it is determined that the translation condition is met, allocate a unique local address ULA to the user equipment; and
the sending module 901 is further configured to send the ULA to the user equipment, where
the routing translation policy includes an address translation relationship between the ULA and the IANA of the access device.

In a possible design, the receiving module 902 is further configured to receive an IPv6 packet sent by the user equipment, where the IPv6 packet carries the ULA;
the processing module 903 is further configured to translate, according to the routing translation policy, the ULA carried in the IPv6 packet into the IANA of the access device; and
the sending module 901 is further configured to send a translated IPv6 packet to the upper-level access device.

In a possible design, the sending module 901 is specifically configured to:
send a router advertisement RA packet to the user equipment, where the RA packet carries the ULA; or
send a dynamic host configuration protocol DHCP packet to the user equipment, where the DHCP packet carries the ULA.

In a possible design, the upper-level access device is a network edge device, and the access device is a routing device; or the upper-level access device is a broadband remote access server BRAS, and the access device is a network edge device.

In a possible design, when the upper-level access device is the BRAS, the access device is connected to the BRAS in a bridging manner.

Another possible scenario is described below.

The sending module 901 is configured to request an identity association for non-temporary address IANA and an identity association for prefix delegation IAPD address prefix from an upper-level access device;
the receiving module 902 is configured to receive the IANA allocated by the upper-level access device to the access device; and
the processing module 903 is configured to: when it is determined that a transparent transmission condition is met, create a transparent transmission policy for a downstream user equipment connected to the access device, where the transparent transmission policy is that the access device transparently transmits an IPv6 packet between the user equipment and the upper-level access device; and
the transparent transmission condition includes that the access device does not receive the IAPD address prefix sent by the upper-level access device, or a number of mask bits of the IAPD address prefix that is sent by the upper-level access device and that is received by the access device is M, where M is a maximum number of mask bits of a prefix in an IPv6 network address.

In a possible design, the receiving module 902 is further configured to receive a request packet for obtaining an IANA by the user equipment;
the sending module 901 is further configured to transparently transmit the request packet to the upper-level access device according to the transparent transmission policy;
the receiving module 902 is further configured to receive the IANA allocated by the upper-level access device to the user equipment; and
the sending module 901 is further configured to send the IANA of the user equipment to the user equipment.

In a possible design, the upper-level access device is a network edge device, and the access device is a routing device; or the upper-level access device is a broadband remote access server BRAS, and the access device is a network edge device.

In a possible design, when the upper-level access device is the BRAS, the access device is connected to the BRAS in a bridging manner.

It should be noted that, division of the modules in embodiments of this application is an example, and is merely logical function division. In an actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes a plurality of instructions for instructing a computer device (which may be a personal computer, a server, a network device, or the like) or a processor (processor) to perform all or some of the steps of the methods in embodiments of this application. The foregoing storage medium includes any medium that may store program code, such as a USB flash drive, a removable hard disk drive, a read-only memory (read-only memory, ROM), a random access memory (random access memory, RAM), a magnetic disk, or a compact disc.

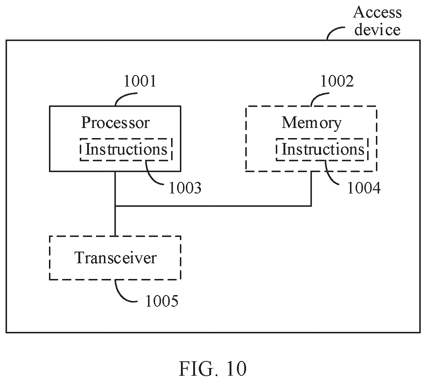

Based on a same concept as the foregoing processing method for a voice service, as shown in FIG. 10, an embodiment of this application further provides a diagram of a structure of an access device. The access device may be configured to implement the method for an ONT or a routing device described in the foregoing embodiments. For details, refer to descriptions in the foregoing method embodiments.

The access device includes one or more processors 1001. The access device includes the one or more processors 1001, and the one or more processors 1001 may implement the methods introduced in the foregoing method embodiments. The access device may include a transceiver unit, to input (receive) and output (send) a signal. For example, the transceiver unit may be a communication interface, a transceiver, or a radio frequency chip. Optionally, the processor 1001 may further implement another function in addition to the methods in the foregoing embodiments. The processor 1001 may be a general-purpose processor, a dedicated processor, or the like. Optionally, in a design, the processor 1001 may execute instructions, to cause the access device to perform the methods described in the foregoing method embodiments. All or some of the instructions, for example, instructions 1003, may be stored in the processor. Alternatively, all or some of the instructions, for example, instructions 1004, may be stored in a memory 1002 coupled to the processor. Alternatively, instructions 1003 and instructions 1004 may together cause the access device to perform the methods described in the foregoing method embodiments.

In another possible design, the access device may further include a circuit, and the circuit may implement functions described in the foregoing method embodiments.

In still another possible design, the access device may include one or more memories 1002 storing the instructions 1004. The instructions may be run on the processor, to cause the access device to perform the methods described in the foregoing method embodiments. Optionally, the memory may further store data. Optionally, the processor may also store the instructions and/or the data. For example, the one or more memories 1002 may store a correspondence described in the foregoing embodiments, or a related parameter, table, or the like involved in the foregoing embodiments. The processor and the memory may be separately arranged, or may be integrated with each other.

In yet another possible design, the access device may further include a transceiver 1005. The processor 1001 may be referred to as a processing unit, to control the access device. The transceiver 1005 may be referred to as a transceiver, a transceiver circuit, a transceiver unit, or the like, and is configured to implement a transceiver function of the access device.

It should be noted that, the processor in embodiments of this application may be an integrated circuit chip having a signal processing capability. In an implementation process, steps in the foregoing method embodiments may be completed by using a hardware integrated logical circuit in the processor, or by using instructions in a form of software. The processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that, the memory in embodiments of this application may be a volatile memory or a nonvolatile memory, or may include both a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM) that is used as an external cache. Through example but not limitative descriptions, many forms of RAMs may be available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, memories of the systems and methods described in this specification are intended to include but are not limited to these memories and any memory of another proper type.

An embodiment of this application further provides a computer-readable storage medium, storing a computer program, where when the computer program is executed by a computer, the processing method for a voice service applied to any method embodiment of an access device is implemented.

An embodiment of this application further provides a computer program product. When the computer program product is executed by a computer, the routing method for a home network applied to any method embodiment of an access device is implemented.

It may be clearly understood by a person skilled in the art that, for the purpose of convenient and brief description, for a specific working process of the communication system described above, refer to a corresponding process in the foregoing method embodiments. Details are not described herein again.

An embodiment of this application provides a computer-readable medium, configured to store a computer program. The computer program includes instructions used to perform method steps in the method embodiments corresponding to the routing device or the ONT in FIG. 3 to FIG. 8.

A person of ordinary skill in the art may be aware that, in combination with examples described in embodiments disclosed in this specification, units and algorithm steps can be implemented by electronic hardware, computer software, or a combination thereof. To clearly describe interchangeability between the hardware and the software, the foregoing descriptions have generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation is outside the scope of this application.

It may be clearly understood by a person skilled in the art that, for the purpose of convenient and brief description, for a specific working process of the system, access device, and units described above, refer to a corresponding process in the foregoing method embodiments. Details are not described herein again.

In a plurality of embodiments provided in this application, it should be understood that, the disclosed system, access device, and methods may be implemented in other manners. For example, access device embodiments described above are merely examples. For example, division of the modules is merely logical function division. In an actual implementation, there may be another division manner. For example, a plurality of modules or components may be combined or may be integrated to another system, or some features may be ignored or not executed. In addition, displayed or discussed mutual coupling or direct coupling or communication connection may be indirect coupling or communication connection implemented through some interfaces, access devices, or modules, or may be electrical, mechanical, or other forms of connection.

Modules described as separate components may or may not be physically separate, and components displayed as modules may or may not be physical modules, to be specific, may be located at one position, or may be distributed on a plurality of network modules. Some or all of the modules may be selected based on an actual requirement, to implement the objectives of the solutions of embodiments of this application.

In addition, functional modules in embodiments of this application may be integrated into one processing module, or may exist alone physically, or two or more modules may be integrated into one module. The integrated module may be implemented in a form of hardware, or may be implemented in a form of a software functional module.

Through descriptions of the foregoing implementations, a person skilled in the art may clearly understand that, this application may be implemented by using hardware, firmware, or a combination thereof. When this application is implemented by using the software, the foregoing functions may be stored in a computer-readable storage medium or transmitted as one or more instructions or code in the computer-readable storage medium. The computer-readable storage medium includes a computer storage medium and a communication medium. The communication medium includes any medium that facilitates transfer of a computer program from one place to another place. The storage medium may be any available medium accessible to a computer. The following provides an example but does not impose a limitation: The computer-readable storage medium may include a RAM, a ROM, an EEPROM, a CD-ROM or another compact disc storage, a magnetic disk storage medium or another magnetic storage device, or any other medium that can be used to carry or store expected program code in a form of instructions or a data structure and that can be accessed by the computer. In addition, any connection may be properly defined as the computer-readable storage medium. For example, if software is transmitted from a website, a server, or another remote source by using a coaxial cable, an optical fiber/cable, a twisted pair, a digital subscriber line (DSL), or wireless technologies such as infrared ray, radio, and microwave, the coaxial cable, optical fiber/cable, twisted pair, DSL, or wireless technologies such as infrared ray, radio, and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc, where the disk usually copies data magnetically, and the disc copies data optically by using a laser. The foregoing combination should also be included in the protection scope of the computer-readable storage medium.

It is clear that a person skilled in the art may make various modifications and variations to this application without departing from the scope of this application. This application is intended to include these modifications and variations of this application provided that they fall within the scope of protection defined by the claims and their equivalent technologies.

## Claims

1. A routing method for a home network, wherein the method is applied to an access device using an IPv6 network, and comprises:
requesting an identity association for non-temporary address IANA and an identity association for prefix delegation IAPD address prefix from an upper-level access device;
receiving the IANA allocated by the upper-level access device to the access device; and
when it is determined that a translation condition is met, creating a routing translation policy for a downstream user equipment connected to the access device, wherein the routing translation policy is used for the downstream user equipment connected to the access device to communicate with the upper-level access device by using the IANA of the access device; and
the translation condition comprises that the access device does not receive the IAPD address prefix sent by the upper-level access device, or a number of mask bits of the IAPD address prefix that is sent by the upper-level access device and that is received by the access device is M, wherein M is a maximum number of mask bits of a prefix in an IPv6 network address.

2. The method according to claim 1, wherein the method further comprises:
when it is determined that the translation condition is met, allocating a unique local address, ULA, to the user equipment, and sending the ULA to the user equipment, wherein
the routing translation policy comprises an address translation relationship between the ULA and the IANA of the access device.

3. The method according to claim 2, wherein the method further comprises:
receiving, by the access device, an IPv6 packet sent by the user equipment, wherein the IPv6 packet carries the ULA; and
translating, by the access device according to the routing translation policy, the ULA carried in the IPv6 packet into the IANA of the access device, and sending a translated IPv6 packet to the upper-level access device.

4. The method according to claim 2 or 3, wherein the sending the ULA to the user equipment comprises:
sending a router advertisement RA packet to the user equipment, wherein the RA packet carries the ULA; or
sending a dynamic host configuration protocol DHCP packet to the user equipment, wherein the DHCP packet carries the ULA.

5. The method according to any one of claims 1 to 4, wherein the upper-level access device is a network edge device, and the access device is a routing device; or the upper-level access device is a broadband remote access server BRAS, and the access device is a network edge device.

6. The method according to claim 5, wherein when the upper-level access device is the BRAS, the access device is connected to the BRAS in a bridging manner.

7. A routing method for a home network, wherein the method is applied to an access device using an IPv6 home network, and comprises:
requesting an identity association for non-temporary address IANA and an identity association for prefix delegation IAPD address prefix from an upper-level access device;
receiving the IANA allocated by the upper-level access device to the access device; and
when it is determined that a transparent transmission condition is met, creating a transparent transmission policy for a downstream user equipment connected to the access device, wherein the transparent transmission policy is that the access device transparently transmits an IPv6 packet between the user equipment and the upper-level access device; and
the transparent transmission condition comprises that the access device does not receive the IAPD address prefix sent by the upper-level access device, or a number of mask bits of the IAPD address prefix that is sent by the upper-level access device and that is received by the access device is M, wherein M is a maximum number of mask bits of a prefix in an IPv6 network address.

8. The method according to claim 7, wherein the method further comprises:
receiving a request packet for obtaining an IANA by the user equipment, and transparently transmitting the request packet to the upper-level access device according to the transparent transmission policy; and
receiving the IANA allocated by the upper-level access device to the user equipment, and sending the IANA of the user equipment to the user equipment.

9. The method according to claim 7 or 8, wherein the upper-level access device is a network edge device, and the access device is a routing device; or the upper-level access device is a broadband remote access server BRAS, and the access device is a network edge device.

10. The method according to claim 9, wherein when the upper-level access device is the BRAS, the access device is connected to the BRAS in a bridging manner.

11. An access device, wherein the access device uses an IPv6 network, and the access device comprises:
a sending module, configured to request an identity association for non-temporary address IANA and an identity association for prefix delegation IAPD address prefix from an upper-level access device;
a receiving module, configured to receive the IANA allocated by the upper-level access device to the access device; and
a processing module, configured to: when it is determined that a translation condition is met, create a routing translation policy for a downstream user equipment connected to the access device, wherein the routing translation policy is used for the downstream user equipment connected to the access device to communicate with the upper-level access device by using the IANA of the access device; and
the translation condition comprises that the access device does not receive the IAPD address prefix sent by the upper-level access device, or a number of mask bits of the IAPD address prefix that is sent by the upper-level access device and that is received by the access device is M, wherein M is a maximum number of mask bits of a prefix in an IPv6 network address.

12. The access device according to claim 11, wherein the processing module is further configured to:
when it is determined that the translation condition is met, allocate a unique local address, ULA to the user equipment; and
the sending module is further configured to send the ULA to the user equipment, wherein
the routing translation policy comprises an address translation relationship between the ULA and the IANA of the access device.

13. The access device according to claim 12, wherein the receiving module is further configured to receive an IPv6 packet sent by the user equipment, wherein the IPv6 packet carries the ULA;
the processing module is further configured to translate, according to the routing translation policy, the ULA carried in the IPv6 packet into the IANA of the access device; and
the sending module is further configured to send a translated IPv6 packet to the upper-level access device.

14. The access device according to claim 12 or 13, wherein the sending module is specifically configured to:
send a router advertisement RA packet to the user equipment, wherein the RA packet carries the ULA; or
send a dynamic host configuration protocol DHCP packet to the user equipment, wherein the DHCP packet carries the ULA.

15. The access device according to any one of claims 11 to 14, wherein the upper-level access device is a network edge device, and the access device is a routing device; or the upper-level access device is a broadband remote access server BRAS, and the access device is a network edge device.

16. The access device according to claim 15, wherein when the upper-level access device is the BRAS, the access device is connected to the BRAS in a bridging manner.

17. An access device, wherein the access device uses IPv6, and the access device comprises:
a sending module, configured to request an identity association for non-temporary address IANA and an identity association for prefix delegation IAPD address prefix from an upper-level access device;
a receiving module, configured to receive the IANA allocated by the upper-level access device to the access device; and
a processing module, configured to: when it is determined that a transparent transmission condition is met, create a transparent transmission policy for a downstream user equipment connected to the access device, wherein the transparent transmission policy is that the access device transparently transmits an IPv6 packet between the user equipment and the upper-level access device; and
the transparent transmission condition comprises that the access device does not receive the IAPD address prefix sent by the upper-level access device, or a number of mask bits of the IAPD address prefix that is sent by the upper-level access device and that is received by the access device is M, wherein M is a maximum number of mask bits of a prefix in an IPv6 network address.

18. The access device according to claim 17, wherein the receiving module is further configured to receive a request packet for obtaining an IANA by the user equipment;
the sending module is further configured to transparently transmit the request packet to the upper-level access device according to the transparent transmission policy;
the receiving module is further configured to receive the IANA allocated by the upper-level access device to the user equipment; and
the sending module is further configured to send the IANA of the user equipment to the user equipment.

19. The access device according to claim 17 or 18, wherein the upper-level access device is a network edge device, and the access device is a routing device; or the upper-level access device is a broadband remote access server BRAS, and the access device is a network edge device.

20. The access device according to claim 19, wherein when the upper-level access device is the BRAS, the access device is connected to the BRAS in a bridging manner.

21. An access device, comprising a processor and a memory, wherein the memory stores a computer program; and the processor is configured to execute the computer program stored in the memory, to cause the method according to any one of claims 1 to 10 to be performed.

22. A computer-readable storage medium, storing instructions, wherein when the instructions are executed by a processor, the method according to any one of claims 1 to 10 is caused to be performed.
